# EUROPÄISCHE PATENTSCHRIFT

(11) **EP 3 797 577 B1**
(45) Veröffentlichungstag und Bekanntmachung des Hinweises auf die Patenterteilung: **10.09.2025**
(21) Anmeldenummer: 20186173.9
(22) Anmeldetag: 16.07.2020
(51) Int. Cl.: A01F 12/28, A01D 41/127, A01F 12/26, A01F 12/18, A01F 7/06

(54) **MÄHDRESCHER MIT RESTKORNSENSOR**
COMBINE HARVESTER WITH RESIDUAL GRAIN SENSOR
MOISSONNEUSE-BATTEUSE POURVUE DE CAPTEUR DE GRAINS RESTANTS

(30) Priorität: 24.09.2019 DE 102019125643
(43) Veröffentlichungstag der Anmeldung: 31.03.2021
(73) Patentinhaber: CLAAS Selbstfahrende Erntemaschinen GmbH, 33428 Harsewinkel (DE)
(72) Erfinder: Bußmann, Jens, 49179 Ostercappeln (DE)
(74) Vertreter: CLAAS Gruppe

(56) Entgegenhaltungen:
- EP-A1- 3 494 774
- DE-A1- 10 307 705
- DE-A1- 102011 088 543
- US-A1- 2016 081 271
- US-A1- 2017 231 155

## Beschreibung

Die vorliegende Erfindung betrifft einen Mähdrescher mit einer Trennstufe zum Auftrennen eines Erntegutstroms in einen an aus dem Erntegut ausgedroschenen Körnern reichen Teilstrom, im Folgenden auch als Nutzstrom bezeichnet, und einen Reststrom, der an Körnern zwar abgereichert, aber nicht völlig frei ist. Der Reststrom besteht im Wesentlichen aus Stroh, Ährenspindeln, Spelzen und dergleichen bestehenden Reststrom. In dem Reststrom noch vorhandene Körner können als ausgedroschene Körner oder als Ähren oder Ährenfragmente vorliegen, in denen Körner noch mit einer Ährenspindel zusammenhängen. Dieser Reststrom wird üblicherweise wieder als Schwad wieder auf das Feld ausgegeben, von dem zuvor der Erntegutstrom aufgenommen wurde. In diesem Reststrom noch enthaltene Körner gehen beim Auswerfen aufs Feld verloren.

Um solche Verluste an Korn zu minimieren, ist z.B. aus DE 10 2006 015 152 A1 bekannt, in einem Auswurfkanal, über den der Reststrom wieder auf das Feld ausgebracht wird, einen Kornsensor anzubringen, der aus der Intensität eines Geräuschs, das die Körner des Reststroms beim Aufprall auf eine Oberfläche erzeugen, einen Rückschluss auf Menge der Körner in dem Teilstrom und, basierend hierauf, eine Optimierung des Dresch- und Trennvorgangs ermöglicht. Der Restkornsensor spricht nur an auf ausgedroschene Körner an. Sogenannter Ausdruschverlust, d.h. Körner, bei denen bereits das Ausdreschen nicht gelungen ist und die noch an der Ähre oder deren Bruchstücken hängen, wird nicht erfasst. Den Ausdruschverlust aus dem auf dem Feld abgelegten Schwad zu ermitteln ist zeitaufwendig, außerdem ist der Nutzen einer Nutzen einer solchen Ermittlung begrenzt, da sich in der zum Ermitteln der Ausdruschverluste benötigten Zeit die Betriebsbedingungen des Mähdreschers so stark geändert haben können, dass eine in Anbetracht der Ausdruschverluste beschlossene Änderung der Betriebsparameter zu dem Zeitpunkt, an dem sie zur Verfügung steht, möglicherweise bereits veraltet ist und die Dreschergebnisse nicht verbessert. Außerdem ist eine Verringerung des Ausdruschverlusts zwar theoretisch durch intensiveres Dreschen leicht erreichbar, kann aber aufgrund der damit verbundenen Erhöhung des Energieverbrauchs und des Bruchkornanteils wirtschaftlich nachteilig sein. F¹

EP 3 494 774 A1 offenbart einen gattungsgemäßen Mähdrescher.

Um einen Mähdrescher wirtschaftlich betreiben zu können, ist es daher wünschenswert, Daten über den Ausdruschverlust in Echtzeit zur Verfügung stellen zu können.

Dieses Ziel wird erfindungsgemäß erreicht, indem bei einem Mähdrescher mit einer Trennstufe, die einen Eingang für einen Erntegutstrom, einen ersten Ausgang für einen aus dem Erntegutstrom gewonnenen, an ausgedroschenen Körnern reichen Nutzstrom und einen zweiten Ausgang für einen kornarmen Reststrom aufweist, mit einem an den zweiten Ausgang angeschlossenen Auswurfkanal zum Auswerfen des Reststroms aus dem Mähdrescher und einem an dem Auswurfkanal angeordneten Kornsensor zum Erfassen eines Anteils von ausgedroschenen Körnern im Reststrom eine zuschaltbare Nachdrescheinrichtung am zweiten Ausgang der Trennstufe vorgesehen ist.

Indem die zuschaltbare Drescheinrichtung als Nachdrescheinrichtung am zweiten Ausgang der Trennstufe platziert ist, hat die Frage, ob die Nachdrescheinrichtung zugeschaltet ist oder nicht, keinen Einfluss auf den Dreschbetrieb stromaufwärts vom zweiten Ausgang. Dies erleichtert das Finden von angemessenen Dreschwerkeinstellungen anhand der Daten des Kornsensors. Die Nachteile des intensiven Dreschens, erhöhter Energieverbrauch und erhöhter Bruchkornanteil, treten nur in denjenigen Betriebsphasen des Mähdreschers auf, in denen die Nachdrescheinrichtung tatsächlich in Betrieb ist. Deren Anteil an der Gesamtbetriebszeit des Mähdreschers kann je nach Bedarf klein gewählt werden, so dass die Messung über die Gesamtbetriebszeit gemittelt nur minimale Auswirkungen auf den Energieverbrauch des Mähdreschers und den Bruchkornanteil hat.

Die Trennstufe umfasst einen Trennrotor. Der Eingang und der zweite Ausgang befinden sich an entgegengesetzten Enden des Trennrotors.

Der Trennrotor kann auch in seinem stromaufwärtigen Bereich als Dreschvorrichtung ausgelegt sein, oder er kann einem getrennten Dreschwerk nachgeschaltet sein, um an seinem Eingang einen gedroschenen Erntegutstrom von dem Dreschwerk zu übernehmen.

Bezogen auf eine Förderrichtung des Ernteguts vom Eingang zum zweiten Ausgang kann die Trennstufe einen stromaufwärtigen Abschnitt, in dem sich der erste Ausgang befindet, und einen stromabwärtigen Abschnitt aufweisen, in dem sich die Nachdrescheinrichtung befindet. Die Nachdrescheinrichtung dient dann ausschließlich der Erhöhung des von Kornsensor erfassbaren Anteils isolierter Körner im Reststrom, und von der Nachdrescheinrichtung zusätzlich ausgedroschene Körner durchlaufen sämtlich den zweiten Ausgang und sind mittels des Kornsensors nachweisbar, was die Auswertung des Sensorsignals und dessen Umrechnung in eine Kornmenge vereinfacht.

Einer bevorzugten Alternative zufolge ist der erste Ausgang bezogen auf eine Förderrichtung des Ernteguts vom Eingang zum zweiten Ausgang langgestreckt, und ein Abschnitt der Trennstufe, in dem sich die Nachdrescheinrichtung befindet, überlappt in der Förderrichtung mit einem stromabwärtigen Ende des ersten Ausgangs. So können von den von der Nachdrescheinrichtung zusätzlich ausgedroschenen Körnern welche dem Nutzstrom zugeführt werden.

Außerdem können an dem zweiten Ausgang weitere Nachdrescheinrichtungen vorgesehen sein, die nicht zuschaltbar, sondern während eines Ernteeinsatzes ständig in Betrieb sind. Der Energieaufwand für deren Betrieb ist gerechtfertigt, weil von dem von diesen Nachdrescheinrichtungen ausgedroschenes Korn wenigstens zum Teil über den überlappenden ersten Ausgang in den Nutzstrom gelangen und so die Ausbeute verbessen kann.

Die zuschaltbare Nachdrescheinrichtung umfasst wenigstens ein radial verstellbares Segment eines den Trennrotor umgebenden Abscheidekorbs.

Andere, in Umfangsrichtung benachbarte Segmente des Abscheidekorbs können die weiteren Nachdrescheinrichtungen bilden.

Das radial verstellbare Segment ist vorzugsweise durch Schwenken um eine in der Förderrichtung orientierte Achse verstellbar.

Wenn die Achse benachbart zu einem bezogen auf die Drehrichtung des Trennrotors vorderen Rand des Segments verläuft, kann das Segment in der zugeschalteten Stellung mit dem Trennrotor einen in dessen Drehrichtung enger werdenden Spalt bilden, in dem das Erntegut durch Verdichtung und Scherwirkung gedroschen wird.

Der Trennrotor kann in einem bezogen auf die Förderrichtung stromaufwärtigen Abschnitt mit einem ersten Typ von Werkzeugen und in einem stromabwärtigen Abschnitt mit einem zweiten Typ von Werkzeugen bestückt sein, die im stromaufwärtigen Abschnitt fehlen. Diese Werkzeuge des zweiten Typs können im Hinblick auf ihre Dreschwirkung im Zusammenwirken mit der zuschaltbaren Nachdrescheinrichtung und ggf. den weiteren Nachdrescheinrichtungen optimiert sein.

Die Werkzeuge des zweiten Typs sollten in der Förderrichtung mit dem radial verstellbaren Segment überlappen.

Der Restkornsensor ist vorzugsweise mit einer Auswerteeinrichtung verbunden, die eingerichtet ist, eine Differenz zwischen einem Signal des Restkornsensors bei zugeschalteter Nachdrescheinrichtung und einem Signal des Restkornsensors bei nicht zugeschalteter Nachdrescheinrichtung zu bilden; diese Differenz ist repräsentativ für die Menge an durch das Zuschalten zusätzlich ausgedroschenem Korn und damit auch ein Maß für den Ausdruschverlust, der ohne das Zuschalten mit dem Reststrom zurück aufs Feld gelangt wäre.

Die Auswerteeinrichtung kann ferner eingerichtet sein, einen Betriebsparameter der Trennstufe oder einer der Trennstufe vorgelagerten Dreschstufe zu verändern, wenn die Differenz zwischen den Signalen des Restkornsensors eine Schwelle überschreitet.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch den hinteren Bereich eines Mähdreschers gemäß der vorliegenden Erfindung;
- Fig. 2: das vordere Ende eines in dem Mähdrescher verwendeten Trennrotors;
- Fig. 3: das hintere Ende eines in dem Mähdrescher verwendeten Trennrotors;
- Fig. 4: eine perspektivische Ansicht eines mit dem Trennrotor zusammenwirkenden Abscheidekorbs mit einer zuschaltbaren Nachdrescheinrichtung;
- Fig. 5: einen axialen Schnitt durch den Trennrotor und den Abscheidekorb mit der zuschaltbaren Nachdrescheinrichtung in einer Ruhestellung; und
- Fig. 6: einen zu Fig. 5 analogen Schnitt mit der Nachdrescheinrichtung in zugeschalteter Stellung.

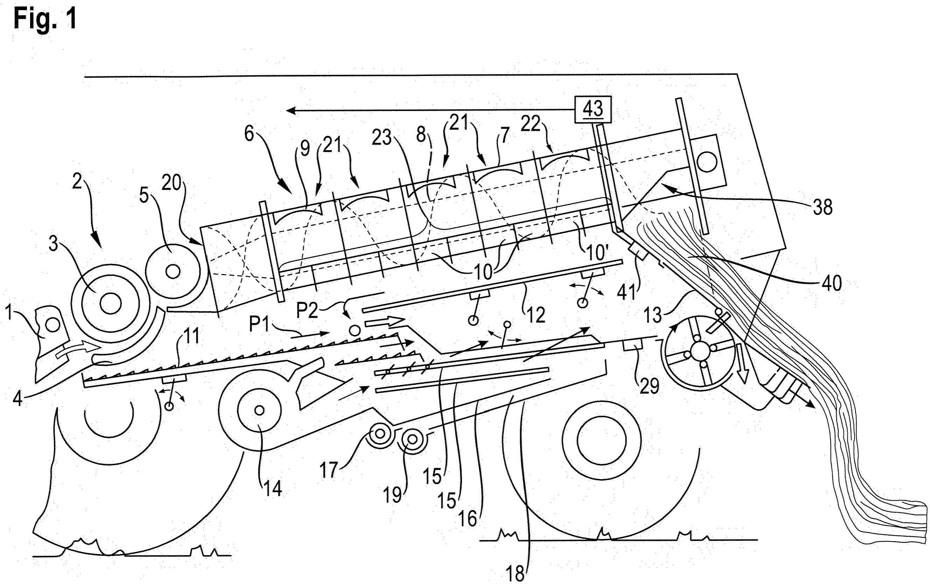

Fig. 1 zeigt einen schematischen Schnitt durch den hinteren Bereich eines Mähdreschers. Ein Erntegutstrom von gemähtem Getreide wird durch einen an sich bekannten Erntevorsatz im nicht dargestellten vorderen Bereich des Mähdreschers gemäht und aufgenommen und von einer nur ausschnittweise dargestellten Fördereinrichtung 1 einer tangential wirkenden Drescheinrichtung 2 zugeführt. Die Drescheinrichtung 2 ist im wesentlichen aufgebaut aus einer Dreschtrommel 3 mit quer zur Fahrrichtung des Mähdreschers orientierter Achse, die an ihrem Außenmantel mit Reibelementen bestückt ist und auf einem Teil ihres Umfangs von einem Dreschkorb 4 umgeben ist. Ein Teil der in der Drescheinrichtung 2 von den Halmen getrennten Körner fällt durch Löcher des Dreschkorbes 4 auf einen Förderboden 11, auf dem diese, wie durch einen Pfeil P1 angedeutet, entgegen der Fahrtrichtung des Mähdreschers durch Rüttelbewegungen gefördert werden.

Der überwiegende Teil des Erntegutes wird jedoch zwischen Dreschtrommel 3 und Dreschkorb 4 hindurchgeführt und mit Unterstützung durch eine Leittrommel 5 einer Trennstufe 6 zugeführt.

Die Trennstufe 6 umfasst ein zylindrisches, an seinen Enden offenes Gehäuse 7 und einen sich in dem Gehäuse 7 über seine gesamte Länge erstreckenden, in Fig. 1 als gestrichelter Umriss eingezeichneten Trennrotor 8. Eines der offenen Enden des Gehäuses 7 dient als Eingang 20, über den der Erntegutstrom in die Trennstufe 6 eingespeist wird.

Das Gehäuse 7 ist aus mehreren in axialer Richtung aufeinanderfolgenden rohrförmigen Abschnitten 21, 22 zusammengefügt, die jeweils in einem oberen Umfangsbereich geschlossene Wände aufweisen und in einem unteren Umfangsbereich einen Abscheidekorb 10 aufweisen, über den in dem geförderten Erntegutstrom enthaltene Körner die Trennstufe 6 verlassen können. Die Abscheidekörbe 10 bilden so einen sich in Längsrichtung des Gehäuses 7 erstreckenden Ausgang 23 für einen an Körnern reichen Nutzstrom.

Der Nutzstrom erreicht einen Rückführboden 12. Dieser Rückführboden 12 ist rüttelnd bewegt, so dass auf ihm gesammeltes Material in Fahrtrichtung des Mähdreschers in Richtung des Pfeils P2 befördert wird und schließlich auf dem Förderboden 11 mit dem bereits in der Drescheinrichtung 2 abgeschiedenen Korn zusammentrifft.

Der Förderboden 11 fördert den Nutzstrom zu einer Reinigungsstufe. Diese ist im wesentlichen aufgebaut aus einem Gebläse 14 und einer im Windstrom des Gebläses 14 liegenden Gruppe von Siebböden 15, die in einem nicht dargestellten Rahmengestell zu einer Schwingbewegung angetrieben sind und mit dem Nutzstrom beschickt werden. Das im Nutzstrom enthaltene Korn rieselt durch die schwingenden Siebböden 15 hindurch auf einen abschüssigen ersten Leitboden 16. Am unteren Ende des Leitbodens 16 ist eine Förderschnecke 17 angeordnet, die das Korn zu einem Elevator (nicht dargestellt) und über diesen in einen Korntank (nicht dargestellt) fördert.

Leichte Bestandteile des Nutzstroms werden während des Siebens vom Wind des Gebläses 14 mitgenommen und aus dem Mähdrescher ausgeschieden. Bestandteile des Nutzstroms, die die Siebböden 15 auf ihrer gesamten Länge überquert haben, ohne durchgesiebt oder vom Gebläsewind mitgenommen zu werden, fallen schließlich auf einen zweiten abschüssigen Leitboden 18 und werden von einer an dessen unteren Ende angeordneten Förderschnecke 19 zurück zur Drescheinrichtung 2 oder zur Trennstufe 6 gefördert, um diese erneut zu durchlaufen.

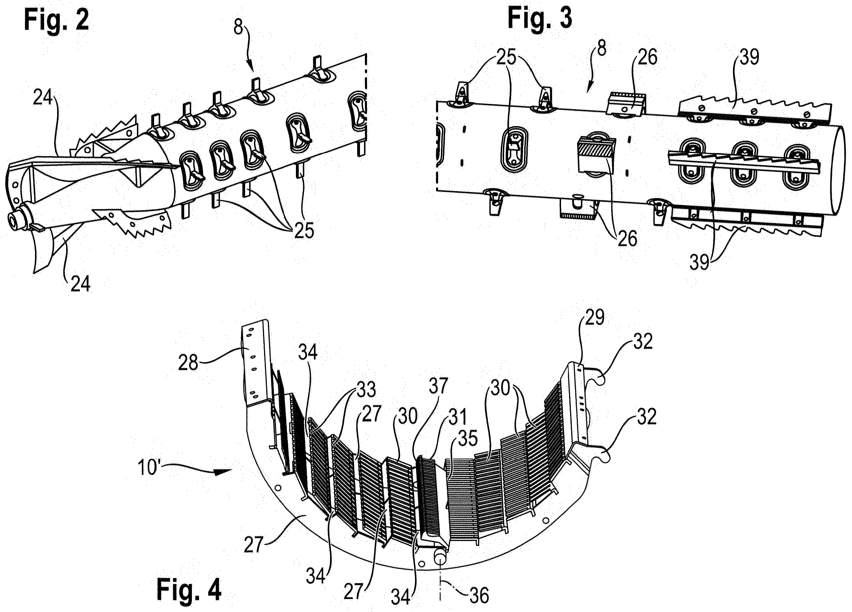

Wie in Fig. 2 zu sehen, ist der Trennrotor 8 an seinem dem Eingang 20 zugewandten Ende mit wendelförmigen Rippen 24 besetzt, deren Rotation das am Eingang 20 eintretende Erntegut zu einer Bewegung auf einer schraubenlinienförmig um die Drehachse des Trennrotors 8 verlaufenden Bahn antreibt.

In einem zweiten Bereich des Trennrotors 8 fehlen die Rippen 24, stattdessen trägt der Trennrotor 8 eine Vielzahl von über den Umfang und entlang der Drehachse verteilten Stiften 25. Da diese das Erntegut nur zu einer Umlaufbewegung um die Drehachse antreiben können, sind zur Erzeugung der notwendigen Förderwirkung entlang der Drehachse und zum Durchkneten des Ernteguts wendelförmige Rippen 9 an einer Innenseite des Gehäuses 7 vorgesehen.

Auf die Stifte 25 folgen in einem dritten Bereich des Trennrotors 8, wie in Fig. 3 gezeigt, entlang der Achse langgestreckte Dreschbalken 26. Dieser dritte Bereich ist vom letzten 22 der rohrförmigen Gehäuseabschnitte umschlossen.

Fig. 4 zeigt in einer perspektivischen Ansicht einen Dresch- oder Abscheidekorb 10', der einen unteren Teil dieses Gehäuseabschnitts 22 bildet. Der Abscheidekorb 10' hat in etwa die Form eines Hohlzylindersektors, der sich über einen Winkel von knapp 180° um die Achse des Trennrotors 8 erstreckt. Er umfasst zwei oder mehr zueinander parallele, zur Achse des Trennrotors 8 konzentrische Trägerbögen 27. Die Trägerbögen 27 sind untereinander durch Stirnleisten 28, 29 und eine Mehrzahl von in Umfangsrichtung entlang der Trägerbögen 27 verteilten axial langgestreckten Segmenten 30, 31 verbunden. Eine der Stirnleisten 28 ist vorgesehen, um lösbar, z.B. mit Hilfe von Bohrungen der Stirnleiste 28 durchsetzenden Schrauben, an einem nicht dargestellten oberen Teil des Gehäuseabschnitts befestigt zu werden, die andere Stirnleiste 29 ist mit Scharnierelementen, hier Haken 32, versehen, die mit komplementären Scharnierelementen des oberen Teils zusammenwirken, um, wenn die Verbindung der Stirnleiste 28 mit dem oberen Teil gelöst ist, den Abscheidekorb 10' schwenken und den Trennrotor 8 freilegen zu können.

Die Segmente 30, 31 sind jeweils als Reibleisten, mit einer dem Trennrotor 8 zugewandten, in axialer Richtung und in Umfangsrichtung des Trennrotors ausgedehnten Reibfläche, ausgebildet.

Eine Mehrheit der Segmente 30 ist unbeweglich an den Trägerbögen 27 montiert. Ihre Reibflächen sind jeweils gegen die Umfangsrichtung so geneigt, dass der Abstand zwischen einem Punkt eines Dreschbalkens 26 und dem ihm in radialer Richtung gegenüberliegenden Punkt eines Segments 30 im Laufe der Drehung abnimmt. So wird das Erntegut, das sich zwischen diesen Punkten befindet, im Laufe der Bewegung in Umfangsrichtung über das Segment 30 hinweg allmählich verdichtet und so einer zunehmenden dreschwirksamen Scherbelastung ausgesetzt, bis es schließlich, nach Passieren der hinteren Kante 33 des Segments 30, wieder expandieren kann. Körner, die auf diese Weise nachträglich ausgedroschen worden sind, können sich infolge der Expansion wieder durch das Erntegut bewegen und über einen Spalt 34 zwischen dem Segment 30 und einem darauffolgenden Segment die Trennstufe 6 verlassen und auf den Rückführboden 12 gelangen. Die Spalte 34 bilden daher einen Teil des sich entlang der Trennstufe 6 erstreckenden Ausgangs 23.

Wenigstens eines der Segmente, mit 31 bezeichnet, ist um eine zu seiner vorderen Kante 35 benachbarte Achse 36 zwischen einer Ruhestellung und einer Wirkstellung schwenkbar. In der Wirkstellung ist der Spalt zwischen einer hinteren Kante 37 des Segments 31 und einem sich daran vorbeibewegenden Dreschbalken 26 kleiner als bei den hinteren Kanten 33 der Segmente 30; in der Ruhestellung ist der Spalt genauso groß wie letztere oder größer.

Nach Durchlaufen des Gehäuseabschnitts 22 erreicht, wie wieder in Fig. 1 gezeigt, ein an Korn verarmter Reststrom von Erntegut einen Ausgang 38 der Trennstufe. Ein in diesen Ausgang 38 hineinragendes Ende des Trennrotors 8 ist mit radial abstehenden Rippen 39 versehen (s. Fig. 3), die das Erntegut radial fortschleudern; das Gehäuse 7 umschließt den Trennrotor 8 nur nach oben, so dass der Reststrom in einen nach unten abzweigenden Auswurfkanal 40 abfließt. In diesem Auswurfkanal 40 ist ein Kornsensor 41 an einer den Reststrom ablenkenden Prallfläche 42 angebracht. Eine Auswerteschaltung 43 ist an den Kornsensor 41 angeschlossen, um aus dem vom Kornsensor 41 aufgezeichneten Geräusch einen auf ausgedroschene, einzelne Körner zurückzuführenden Spektralanteil auszufiltern und basierend auf der Intensität dieses Spektralanteils die Menge an einzelnen Körnern im Reststrom abzuschätzen.

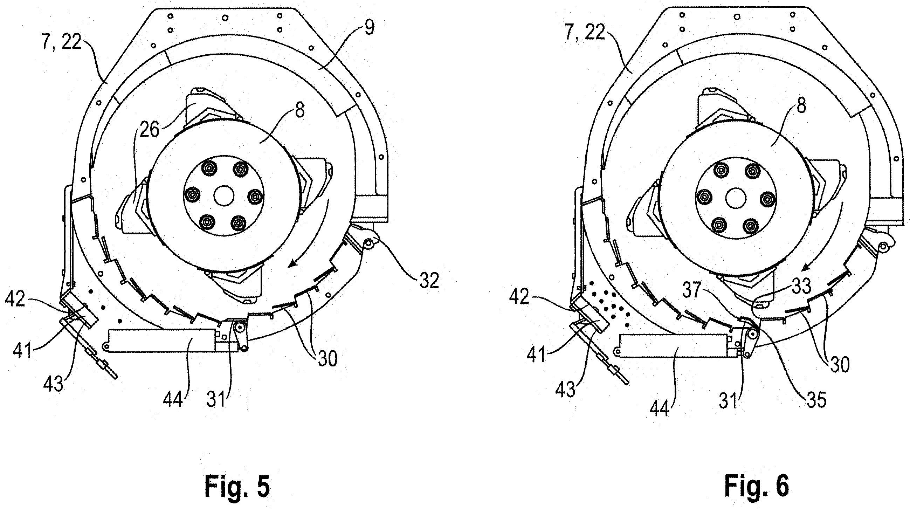

Die Auswerteschaltung 43 steuert ferner einen (in Fig. 4 und 5 gezeigten) hydraulischen oder pneumatischen Stellzylinder 44 zum Verstellen des Segments 31.

Die Auswertung des Signals des Kornsensors 41 durch die Auswerteschaltung 43 erfolgt je nach Stellung des Segments 31 getrennt. Von der Stellung des Segments 31 abhängige Unterschiede des Signals sind zurückzuführen auf Körner, die in der Wirkstellung des Segments 31 ausgedroschen wurden, die aber in der Ruhestellung die Trennstufe 6 durchlaufen hätten, ohne ausgedroschen zu werden. Die Größe dieses Unterschieds ist daher ein Maß für den Ausdruschverlust, das im laufenden Erntevorgang genutzt werden kann, um Betriebsparameter der Drescheinrichtung 2, der Trennstufe 6 oder der Reinigungsstufe zu optimieren.

Um eine solche Optimierung vornehmen zu können, kann vorgesehen werden, dass der von der Auswerteschaltung 43 abgeschätzte Ausdruschverlust sowie der in der Ruhestellung des Segments 31 ermittelte Kornanteil im Reststrom auf einem mit der Auswerteschaltung 43 verbundenen Anzeigeinstrument dem Fahrer des Mähdreschers angezeigt werden und es diesem überlassen wird, anhand der angezeigten Werte die Betriebsparameter zu optimieren. Um eine von Können und Aufmerksamkeit des Fahrers unabhängige Optimierung zu ermöglichen, können die Auswerteeinheit selber programmiert sein, um anhand der ermittelten Werte von Kornanteil und Ausdruschverlust die Betriebsparameter zu optimieren.

Der Betrieb des Segments 31 in der Wirkstellung bewirkt einen erhöhten Energieverbrauch, ein erhöhtes Aufkommen an Nichtkornmaterialien und an Kornbruch, die in den Nutzstrom gelangen. Da die Zeit, die das Segment 31 in der Wirkstellung verbringt, nur ein kleiner Bruchteil der Gesamtbetriebszeit des Mähdreschers ist, bleiben diese Änderungen ohne merkliche Auswirkungen auf den Gesamtenergieverbrauch und auf die Reinheit des Korns, das letztlich in den Korntank gelangt. Gerade weil die Wirkstellung nur zeitweilig eingenommen wird, kann für sie eine sehr kleine Spaltbreite zwischen Segment und Dreschbalken gewählt werden, die einen sehr niedrigen Ausdruschverlust erreicht, im Dauerbetrieb aber möglicherweise zum Aufstauen des Ernteguts in der Trennstufe 6 führen würde.

Ein Teil des in der Wirkstellung des Segments 31 zusätzlich ausgedroschenen Korns verlässt die Trennstufe 6 über die Spalte 34 zwischen den Segmenten und wird deshalb nicht vom Kornsensor 41 erfasst. Um die Empfindlichkeit zu verbessern, mit der der Ausdruschverlust abgeschätzt werden kann, kann daher vorgesehen werden, die Spalte 34 zu verschließen. Vorzugsweise erfolgt eine solche Schließung zeitweilig, d.h. die Spalte 34 sind zwar während des Erntebetriebs meist offen, um wenigstens einen Teil des von den Segmenten 30 ausgedroschenen Korns dem Rückführboden 12 zuzuleiten, können aber durch die Auswerteschaltung 43 geschlossen werden, um dann den Kornanteil des Reststroms im Auswurfkanal 40 in der Ruhestellung bzw. der Wirkstellung des Segments 31 zu messen und daraus den Ausdruschverlust abzuschätzen.

### Bezugszeichen

- 1: Fördereinrichtung
- 2: Drescheinrichtung
- 3: Dreschtrommel
- 4: Dreschkorb
- 5: Leittrommel
- 6: Trennstufe
- 7: Gehäuse
- 8: Förderorgan
- 9: Rippe
- 10: Abscheidekorb
- 11: Förderboden
- 12: Rückführboden
- 13: Rutsche
- 14: Gebläse
- 15: Siebboden
- 16: 1. Leitboden
- 17: Schnecke
- 18: 2. Leitboden
- 19: Schnecke
- 20: Eingang
- 21: rohrförmiger Abschnitt
- 22: rohrförmiger Abschnitt
- 23: Ausgang
- 24: Rippe
- 25: Stift
- 26: Dreschbalken
- 27: Trägerbogen
- 28: Stirnleiste
- 29: Stirnleiste
- 30: Segment
- 31: Segment
- 32: Haken
- 33: hintere Kante
- 34: Spalt
- 35: vordere Kante
- 36: Achse
- 37: hintere Kante
- 38: Ausgang
- 39: Rippe
- 40: Auswurfkanal
- 41: Kornsensor
- 42: Prallfläche
- 43: Auswerteschaltung
- 44: Stellzylinder

## Patentansprüche

1. Mähdrescher mit einer Trennstufe (6), die einen Eingang (20) für einen Erntegutstrom, einen ersten Ausgang (23) für einen aus dem Erntegutstrom gewonnenen, an ausgedroschenen Körnern reichen Nutzstrom und einen zweiten Ausgang (38) für einen kornarmen Reststrom aufweist, mit einem an den zweiten Ausgang (38) angeschlossenen Auswurfkanal (40) zum Auswerfen des Reststroms aus dem Mähdrescher, wobei eine zuschaltbare Nachdrescheinrichtung (31) am zweiten Ausgang (38) der Trennstufe vorgesehen ist, wobei die Trennstufe (6) einen Trennrotor (8) umfasst und der Eingang (20) und der zweite Ausgang (38) sich an entgegengesetzten Enden des Trennrotors (8) befinden, **dadurch gekennzeichnet, dass** der Mähdrescher einen an dem Auswurfkanal (40) angeordneten Restkornsensor (41) zum Erfassen eines Anteils von ausgedroschenen Körnern im Reststrom umfasst und dass die Nachdrescheinrichtung wenigstens ein radial verstellbares Segment (31) eines den Trennrotor umgebenden Abscheidekorbs (10') umfasst.

2. Mähdrescher nach Anspruch 1, **dadurch gekennzeichnet, dass** die Trennstufe (6) einen bezogen auf eine Förderrichtung des Ernteguts vom Eingang (20) zum zweiten Ausgang (38) stromaufwärtigen Abschnitt, in dem sich der erste Ausgang (23) befindet, und einen stromabwärtigen Abschnitt aufweist, in dem sich die Nachdrescheinrichtung befindet.

3. Mähdrescher nach Anspruch 1, **dadurch gekennzeichnet, dass** der erste Ausgang (23) bezogen auf eine Förderrichtung des Ernteguts vom Eingang (20) zum zweiten Ausgang (38) langgestreckt ist und dass ein Abschnitt (22) der Trennstufe (6), in dem sich die Nachdrescheinrichtung (31) befindet, in der Förderrichtung mit einem stromabwärtigen Ende des ersten Ausgangs (23) überlappt.

4. Mähdrescher nach Anspruch 1-3,
**dadurch gekennzeichnet, dass** das radial verstellbare Segment (31) durch Schwenken um eine in der Förderrichtung orientierte Achse (36) verstellbar ist.

5. Mähdrescher nach Anspruch 4,
**dadurch gekennzeichnet, dass** die Achse (36) benachbart zu einem bezogen auf die Drehrichtung des Trennrotors (8) vorderen Rand (35) des Segments (31) verläuft.

6. Mähdrescher einem der Ansprüche 1-6,
**dadurch gekennzeichnet, dass** der Trennrotor (8) in einem bezogen auf die Förderrichtung stromaufwärtigen Abschnitt mit einem ersten Typ von Werkzeugen (25) bestückt ist und in einem stromabwärtigen Abschnitt mit einem zweiten Typ von Werkzeugen (26) bestückt ist, die im stromaufwärtigen Abschnitt fehlen.

7. Mähdrescher nach Anspruch 6,
**dadurch gekennzeichnet, dass** die Werkzeuge des zweiten Typs in der Förderrichtung mit dem radial verstellbaren Segment überlappen.

8. Mähdrescher nach einem der vorhergehenden Ansprüche, **dadurch gekennzeichnet, dass** der Restkornsensor (41) mit einer Auswerteeinrichtung (43) verbunden ist, die eingerichtet ist, eine Differenz zwischen einem Signal des Restkornsensors (41) bei zugeschalteter Nachdrescheinrichtung und einem Signal des Restkornsensors (41) bei nicht zugeschalteter Nachdrescheinrichtung (31) zu bilden.

9. Mähdrescher nach Anspruch 8,
**dadurch gekennzeichnet, dass** die Auswerteeinrichtung (43) eingerichtet ist, einen Betriebsparameter der Trennstufe (6) oder einer der Trennstufe (6) vorgelagerten Dreschstufe (2) zu verändern, wenn die Differenz eine Schwelle überschreitet.

## Claims

1. A combine harvester with a separating stage (6), which has an entrance (20) for a flow of harvested material, a first exit (23) for a flow of crop obtained from the flow of harvested material and which is rich in threshed grains and a second exit (38) for a residual flow which is depleted in grains, with an ejection channel (40) connected to the second exit (38) for ejecting the residual flow from the combine harvester, wherein a connectable rethreshing device (31) is provided at the second exit (38) of the separating stage, wherein the separating stage (6) comprises a separating rotor (8) and the entrance (20) and the second exit (38) are located at opposite ends of the separating rotor (8), **characterized in that** the combine harvester has a residual grain sensor (41) disposed at the ejection channel (40) for detecting a proportion of threshed grains in the residual flow and **in that** the rethreshing device comprises at least one radially adjustable segment (31) of a separating grate (10') surrounding the separating rotor.

2. The combine harvester according to claim 1, **characterized in that** the separating stage (6) has a section, which is upstream of the second exit (38) in relation to a conveying direction of the harvested material from the entrance (20) to the second exit (38), in which the first exit (23) is located, and a downstream section, in which the rethreshing device is located.

3. The combine harvester according to claim 1, **characterized in that** the first exit (23) is elongated in relation to a conveying direction of the harvested material from the entrance (20) to the second exit (38) and **in that** a section (22) of the separating stage (6), in which the rethreshing device (31) is located, overlaps an end of the first exit (23) which is downstream in the conveying direction.

4. The combine harvester according to claim 1 to claim 3, **characterized in that** the radially adjustable segment (31) can be adjusted by pivoting about an axis (36) orientated in the conveying direction.

5. The combine harvester according to claim 4, **characterized in that** the axis (36) extends adjacent to a front edge (35) of the segment (31) in relation to the direction of rotation of the separating rotor (8).

6. The combine harvester according to one of claims 1 to 6, **characterized in that** in a section which is upstream in relation to the conveying direction, the separating rotor (8) is fitted with a first type of tools (25) and in a downstream section with a second type of tools (26) which are absent in the upstream section.

7. The combine harvester according to claim 6, **characterized in that** the tools of the second type overlap the radially adjustable segment in the conveying direction.

8. The combine harvester according to one of the preceding claims, **characterized in that** the residual grain sensor (41) is connected to an evaluation device (43) which is configured to establish a difference between a signal from the residual grain sensor (41) when the rethreshing device is connected and a signal from the residual grain sensor (41) when the rethreshing device (31) is not connected.

9. The combine harvester according to claim 8, **characterized in that** the evaluation device (43) is configured to change an operating parameter of the separating stage (6) or of a threshing stage (2) mounted in front of the separating stage (6) if the difference exceeds a threshold.

## Revendications

1. Moissonneuse-batteuse, comprenant un étage de séparation (6) qui présente une entrée (20) pour un flux de récolte, une première sortie (23) pour un flux utile obtenu à partir du flux de récolte et riche en grains battus, et une deuxième sortie (38) pour un flux résiduel pauvre en grains ; comprenant un canal d'éjection (40) raccordé à la deuxième sortie (38) et destiné à éjecter le flux résiduel de la moissonneuse-batteuse, sachant qu'un dispositif de postbattage (31), pouvant être activé, est prévu sur la deuxième sortie (38) de l'étage de séparation, l'étage de séparation (6) comportant un rotor de séparation (8), et l'entrée (20) et la deuxième sortie (38) se situant à des extrémités opposées du rotor de séparation (8), **caractérisée en ce que** la moissonneuse-batteuse comprend un capteur de grains résiduels (41) disposé sur le canal d'éjection (40) et destiné à détecter une part de grains battus dans le flux résiduel, et **en ce que** le dispositif de postbattage comprend au moins un segment (31), pouvant être réglé radialement, d'une corbeille de séparation (10') entourant le rotor de séparation.

2. Moissonneuse-batteuse selon la revendication 1, **caractérisée en ce que** l'étage de séparation (6) présente une portion qui est située en amont, rapporté à un sens de convoyage de la récolte depuis l'entrée (20) jusqu'à la deuxième sortie (38), et dans laquelle se situe la première sortie (23), et une portion aval dans laquelle se trouve le dispositif de postbattage.

3. Moissonneuse-batteuse selon la revendication 1, **caractérisée en ce que** la première sortie (23) est allongée, rapporté à un sens de convoyage de la récolte depuis l'entrée (20) jusqu'à la deuxième sortie (38), et **en ce qu'**une portion (22) de l'étage de séparation (6), dans laquelle se trouve le dispositif de postbattage (31), se chevauche avec une extrémité aval de la première sortie (23), dans le sens de convoyage.

4. Moissonneuse-batteuse selon les revendications 1 à 3, **caractérisée en ce que** le segment (31) à déplacement radial peut être déplacé par pivotement autour d'un axe (36) orienté dans le sens de convoyage.

5. Moissonneuse-batteuse selon la revendication 4, **caractérisée en ce que** l'axe (36) s'étend à proximité d'un bord avant (35) du segment (31), rapporté au sens de rotation du rotor de séparation (8).

6. Moissonneuse-batteuse selon une des revendications 1 à 6, **caractérisée en ce que** dans une partie située en amont, rapporté au sens de convoyage, le rotor de séparation (8) est équipé d'un premier type d'outils (25), et dans une partie située en aval, est équipé d'un deuxième type d'outils (26) qui sont absents dans la partie amont.

7. Moissonneuse-batteuse selon la revendication 6, **caractérisée en ce que** dans le sens de convoyage, les outils du deuxième type se chevauchent avec le segment à déplacement radial.

8. Moissonneuse-batteuse selon une des revendications précédentes, **caractérisée en ce que** le capteur de grains résiduels (41) est relié à un dispositif d'analyse (43) qui est conçu pour établir une différence entre un signal du capteur de grains résiduels (41), lorsque le dispositif de postbattage est activé, et un signal du capteur de grains résiduels (41), lorsque le dispositif de postbattage (31) n'est pas activé.

9. Moissonneuse-batteuse selon la revendication 8, **caractérisée en ce que** le dispositif d'analyse (43) est conçu pour modifier un paramètre de fonctionnement de l'étage de séparation (6) ou d'un étage de battage (2) placé en amont de l'étage de séparation (6), lorsque la différence dépasse un seuil.
